# EUROPEAN PATENT APPLICATION

(11) **EP 2 329 866 A1**
(43) Date of publication of application: **08.06.2011**
(21) Application number: 10014970.7
(22) Date of filing: 25.11.2010
(51) Int. Cl.: A63C 17/01, B62K 3/00

(54) **Skater**

(30) Priority: 30.11.2009 JP 2009271300; 03.03.2010 JP 2010046007; 03.06.2010 JP 2010127377; 03.06.2010 JP 2010127378
(71) Applicant: J.D. JAPAN Co., Ltd., Minoh-shi Osaka 562-0036 (JP)
(72) Inventor: Yamabe, Hideyasu, Minoh-shi Osaka 562-0036 (JP)
(74) Representative: Engelhardt, Harald

(57) **Abstract**

A two-wheel skater with a handle for steering a front wheel, the skater (11) including a boarding part (12) elastically twistable about a longitudinal axis (30). When the boarding part (12) is twisted, a rear wheel including a swivel caster (21) is rotated about the longitudinal axis (30). The swivel caster (21) is attached to the underside of the rear part (37) of the boarding part (12) with a swiveling axis (28) inclined in a traveling direction. The rotation of the swivel caster (21) can turn the boarding part (12) to the right or the left or achieve a desired driving force for the skater (11).

## Description

### Field of the Invention

The present invention relates to a skater, and more specifically relates to a skater enabling a user on the boarding part of the skater to turn the boarding part to the left or the right or obtain a desired diving force by shifting the weight of the user.

### Background of the Invention

In the related art, a two-wheel skater with a handle is available as described in JP-A-2003-047683. This skater includes a board body, a handle provided at the front of the board body, a front wheel to be steered by the handle, and a rear wheel provided at the rear of the board body. A user kicks the ground with one foot while keeping the other foot on the board body, thereby providing the skater with a driving force for moving forward the skater. The driving force applied to the skater is adjusted by the kicking force of the user. When the user places both feet on the board body during the traveling of the skater, the skater coasts.

When changing the traveling direction of the skater, the user turns the handle in a desired direction. Thus the skater is driven in the turning direction of the handle.

In the skater of the related art, however, the user has to keep continuously kicking the ground with one foot to obtain a driving force for moving the skater. Further, the skater of the related art can travel only in the turning direction of the handle.

### Disclosure of the Invention

An object of the present invention is to provide a skater enabling a user on the boarding part of the skater to turn the boarding part to the left or the right or obtain a desired driving force by shifting the weight of the user.

In order to attain the object, a first aspect of the present invention is a two-wheel skater with a handle, the skater including: a boarding part elastically twistable about a longitudinal axis; a rear wheel including a swivel caster that is attached to the underside of the rear part of the boarding part with a swiveling axis inclined in the traveling direction of the skater; the handle; and a front wheel steered by the handle.

According to the skater of the present invention, a user on the boarding part shifts his/her weight, so that a twisting force is applied to the boarding part about the longitudinal axis and twists the boarding part. In response to the twisting, the swivel caster attached to the underside of the rear part of the boarding part rotates about the swiveling axis. Thus, the rolling direction of the swivel caster forms a predetermined angle with respect to the longitudinal direction of the boarding part, so that the swivel caster rolls on the ground at the predetermined angle with respect to the longitudinal direction and the rear part of the boarding part turns to the left or the right with respect to the front wheel supported by the handle. Therefore, the user can turn the boarding part to the left or the right without turning the handle, only by shifting his/her weight on the boarding part.

Further, according to the skater of the present invention, when the user shifts his/her weight in a twisted state of the boarding part to eliminate the twisting force applied to the boarding part, a restoring force for restoring the boarding part to the initial state is applied to the swivel caster. Because of the restoring force, a force is applied so as to press the swivel caster diagonally downward to the ground in a rear direction. As a reaction of the pressing force, a force is applied diagonally upward in a forward direction from the ground to the boarding part through the swivel caster. Thus, a driving force for advancing the skater is generated. The user can obtain a desired driving force by shifting his/her weight on the boarding part.

In order to attain the object, a second aspect of the present invention is the skater according to the first aspect, wherein the boarding part is composed of a single footboard elastically twistable about the longitudinal axis.

According to the skater, when the user on the single footboard shifts his/her weight, a twisting force about the longitudinal axis is applied to the footboard and twists the footboard, so that the swivel caster attached to the underside of the rear part of the footboard rotates about the swiveling axis. Thus the rolling direction of the swivel caster forms a predetermined angle with respect to the longitudinal direction, so that the swivel caster rolls on the ground at the predetermined angle with respect to the longitudinal direction and the rear part of the footboard turns to the left or the right with respect to the front wheel. Therefore, the user can turn the footboard to the left or the right without turning the handle, only by shifting his/her weight on the footboard.

Further, according to the skater of the present invention, when the user shifts his/her weight in a twisted state of the single footboard to eliminate the twisting force applied to the footboard, a restoring force for restoring the footboard to the initial state is applied to the swivel caster. Because of the restoring force, a force is applied so as to press the swivel caster diagonally downward to the ground in a rear direction. As a reaction of the pressing force, a force is applied diagonally upward in a forward direction from the ground to the boarding part through the swivel caster. Thus, a driving force for advancing the skater is generated. The user can obtain a desired driving force by shifting his/her weight on the boarding part.

In order to attain the object, a ninth aspect of the present invention is the skater according to the first aspect, wherein the boarding part includes a front footboard and a rear footboard, and the skater further includes: a connecting member connecting the front footboard and the rear footboard such that the footboards are relatively twistable about the longitudinal axis; and a member for applying a restoring force against the twisting.

According to the skater of the present invention, when the user shifts his/her weight on the front footboard and the rear footboard, a twisting force about the longitudinal axis is applied from the front footboard and the rear footboard to the connecting member and the member for applying the restoring force against the twisting, so that the connecting member is twisted, the rear footboard is twisted relative to the front footboard, and the swivel caster attached to the underside of the rear footboard rotates about the swiveling axis. Thus the rolling direction of the swivel caster forms a predetermined angle with respect to the longitudinal direction, so that the swivel caster rolls on the ground at the predetermined angle with respect to the longitudinal direction and the front footboard and the rear footboard turn to the left or the right with respect to the front wheel. Therefore, the user can turn the front footboard and the rear footboard to the left or the right without turning the handle, only by shifting his/her weight on the front footboard and the rear footboard.

Further, according to the skater of the present invention, the user shifts his/her weight in a state in which the rear footboard is twisted from the front footboard, eliminating the twisting force applied to the connecting member and the member for applying the restoring force against the twisting. At this point, by the member for applying the restoring force against the twisting, the restoring force for restoring the twisting between the front footboard and the rear footboard to the initial state is applied to the swivel caster. Because of the restoring force, a force is applied so as to press the swivel caster diagonally downward to the ground in a rear direction. As a reaction of the pressing force, a force is applied diagonally upward in a forward direction from the ground to the front footboard and the rear footboard through the swivel caster, so that a driving force for advancing the skater is generated. Therefore, the user can obtain a desired driving force by shifting his/her weight on the front footboard and the rear footboard.

### Brief Description of the Drawings

FIG. 1 is a perspective view showing a skater 11 from diagonally above according to a first embodiment of the present invention;
FIG. 2 is a perspective view showing the skater 11 from diagonally below;
FIG. 3 is a side view of the skater 11;
FIG. 4 is a side view showing a swivel caster 21 of the skater 11 and a part around the swivel caster 21;
FIG. 5 is a plan view for explaining an operating method of the skater 11;
FIG. 6 is a plan view for explaining the operating method of the skater 11;
FIG. 7 is a rear view for explaining the operating method of the skater 11;
FIG. 8 is a plan view for explaining the operating method of the skater 11;
FIG. 9 is a rear view for explaining the operating method of the skater 11;
FIG. 10 is a plan view for explaining the operating method of the skater 11;
FIG. 11 is a plan view showing a track of the skater 11;
FIG. 12 is a plan view showing a track of the skater 11;
FIG. 13 is a plan view showing a turning track of a board body 12 of the skater 11;
FIG. 14 is a plan view showing a turning track of the board body 12 of the skater 11;
FIG. 15 is a perspective view showing a skater 51 from diagonally below according to a second embodiment of the present invention;
FIG. 16 is a perspective view showing a skater 61 from diagonally below according to a third embodiment of the present invention;
FIG. 17 is a perspective view showing a skater 71 from diagonally above according to a fourth embodiment of the present invention;
FIG. 18 is a perspective view showing a skater 81 from diagonally above according to a fifth embodiment of the present invention;
FIG. 19 is a perspective view showing a skater 91 from diagonally above according to a sixth embodiment of the present invention;
FIG. 20 is a side view of the skater 91;
FIG. 21 is an exploded perspective view showing the internal structure of the twisted pipe of the skater 91;
FIG. 22 is a perspective view showing a skater 111 from diagonally above according to a seventh embodiment of the present invention; and
FIG. 23 is a side view of the skater 111.

### Description of the Embodiments

A first embodiment of the present invention will be described below in accordance with the accompanying drawings.

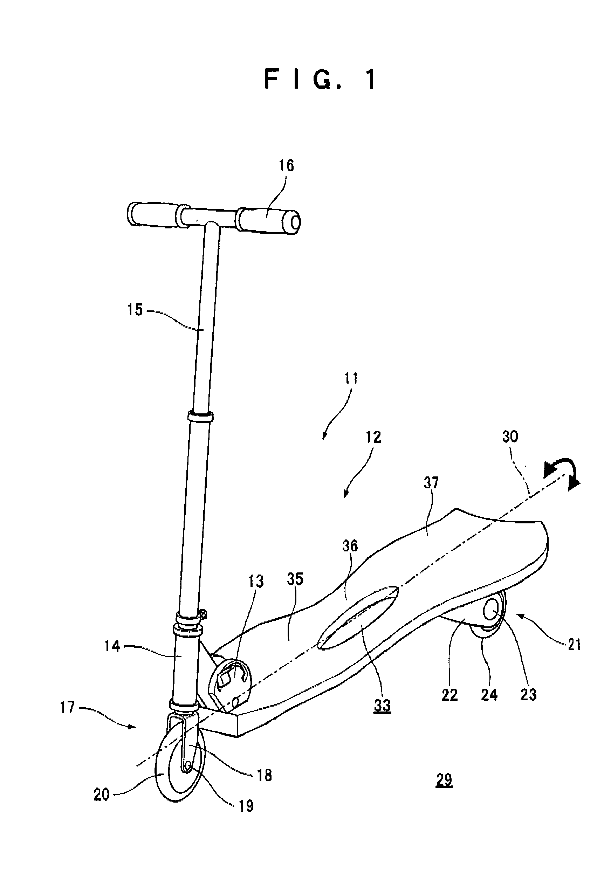

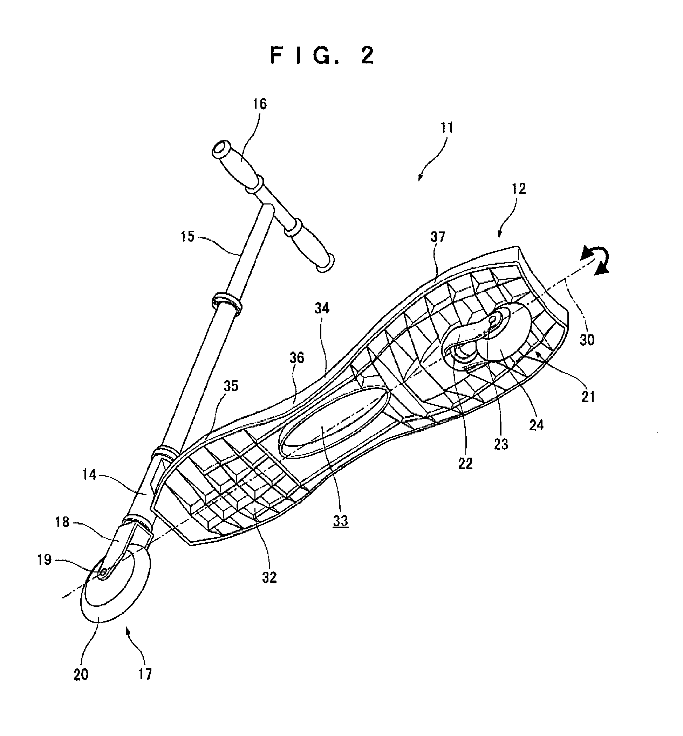

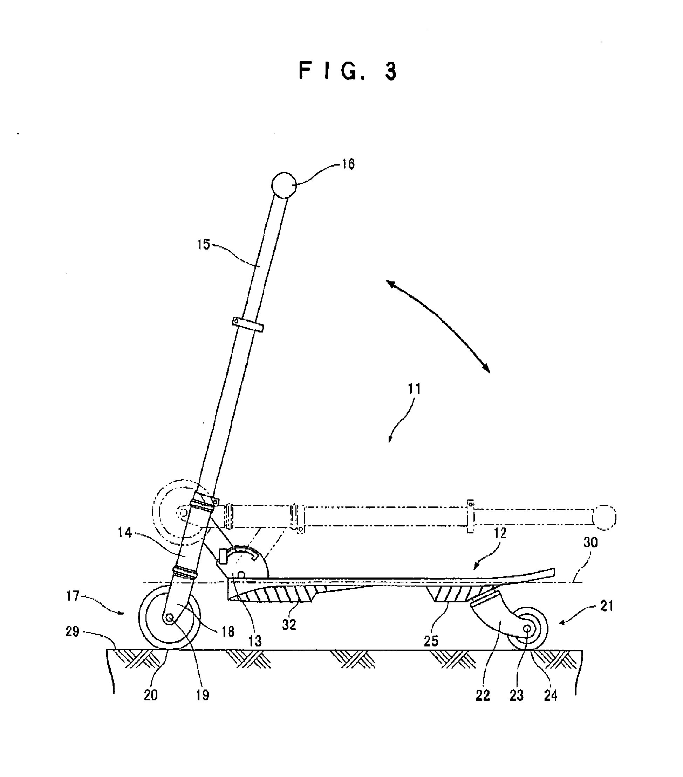

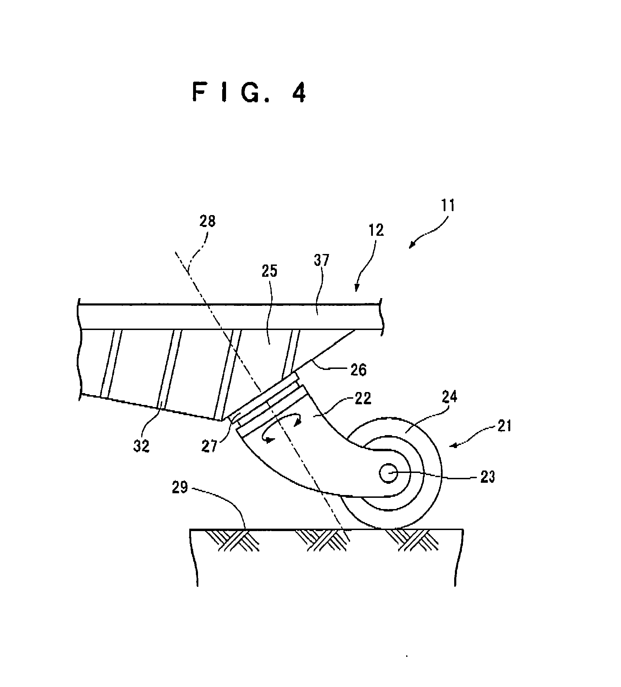

FIG. 1 is a perspective view showing a skater 11 from diagonally above according to the first embodiment of the present invention. FIG. 2 is a perspective view showing the skater 11 from diagonally below. FIG. 3 is a side view of the skater 11. FIG. 4 is a side view showing a swivel caster 21 of the skater 11 and a part around the swivel caster 21.

Reference numeral 11 denotes the skater of the first embodiment. The skater 11 is a two-wheel skater with a handle and includes: a board body 12 that serves as a boarding part elastically twistable about a longitudinal axis 30; a rear wheel (FIG. 4) that includes the swivel caster 21 attached to the underside of a rear part 37 of the board body 12 with a swiveling axis 28 inclined alor.g the traveling direction of the skater; a handle 16 rotationally supported at the front of the board body 12; and a fixed caster 17 serving as a front wheel steered by the handle 16.

The board body 12 is extended from the front and the rear and is composed of a single footboard that is elastically twistable. The board body 12 is made of, e.g., a synthetic resin material.

As shown in FIGS. 1 to 3, at a front part 35 of the board body 12, a handle support part 14 is provided to which a handle shaft 15 is rotationally attached. On the upper end of the handle shaft 15 vertically penetrating the handle support part 14, the handle 16 is attached. On the lower end of the handle shaft 15, the fixed caster 17 is attached. On the underside of the rear part 37 of the board body 12, the rear wheel (FIG. 4) is provided that includes the swivel caster 21 attached to the underside of the rear part 37 of the board body 12 with the swiveling axis 28 inclined along the traveling direction of the skater 11.

The fixed caster 17 is made up of a front fork 18, a front shaft 19, and a front wheel 20. The front fork 18 is attached to the lower end of the handle shaft 15. The front shaft 19 is attached to the front fork 18. The front wheel 20 is rotationally supported by the front shaft 19 about a horizontal axis with respect to the front fork 18.

The handle shaft 15 penetrates the handle support part 14 and supports the front fork 18 while being inclined to the rear with a small angle. On the upper end of the handle shaft 15 extending upward from the handle support part 14, the handle 16 is attached at right angles to the handle shaft 15.

The handle 16 can be folded integrally with the handle support part 14, the handle shaft 15, and the fixed caster 17 on the board body 12. To be specific, a folding mechanism 13 is attached to the front part 35 of the board body 12 and the handle support part 14 is attached to the folding mechanism 13. The handle support part 14 is supported by the folding mechanism 13 so as to pivot about a horizontal axis (FIG. 3). The folding mechanism 13 can be locked in use condition where the handle shaft 15 is raised and in folded condition where the handle shaft 15 is laid on the board body 12. In the folded condition, the skater 11 is compact in size and can be easily carried without the need for a large storage space.

As shown in FIG. 2, reinforcing ribs 32 are formed on the undersides of the front part 35 and the rear part 37 of the board body 12. Since the reinforcing ribs 32 are formed on the undersides of the front part 35 and the rear part 37 of the board body 12, it is possible to reduce the weight of the board body 12 and the cost of materials while maintaining the rigidity of the board body 12.

The board body 12 has a central part 36 that is smaller in width than the front part 35 and the rear part 37 in plan view, so that torsion easily occurs on the central part 36. Therefore, the rear part 37 can be relatively easily twisted about the longitudinal axis 30 with respect to the front part 35 of the board body 12.

In the central part 36 of the board body 12, a through hole 33 is formed and thus the central part 36 of the board body 12 becomes more twistable.

As shown in FIG. 4. on the underside of the rear part 37 of the board body 12, a wedge part 25 having an inclined plane 26 is formed. With respect to the board body 12, the inclined plane 26 is inclined downward at a predetermined angle toward the rear of the skater 11. The inclined plane 26 of the wedge part 25 constitutes a part of the underside of the rear part 37 of the board body 12.

On the inclined plane 26 of the wedge part 25, a bracket 27 of the swivel caster 21 is attached. The swivel caster 21 is attached with the swiveling axis 28 inclined in the traveling direction of the skater 11 from a direction perpendicular to ground 29.

The swivel caster 21 is made up of a rear fork 22 that is attached to the bracket 27 so as to relatively rotate about the swiveling axis, a rear shaft 23 attached to the rear fork 22, and a rear wheel 24 attached rotatably about the axis of the rear shaft 23.

When the board body 12 is twisted about the longitudinal axis 30 to move down the right side of the rear part 37, the swivel caster 21 is diagonally pressed down to the left from the board body 12 and rotates about the swiveling axis 28 such that the rear wheel 24 is placed on the left side of the board body 12 with respect to the center of the board body 12.

when the board body 12 is twisted about the longitudinal axis 30 to move down the left side of the rear part 37, the swivel caster 21 is diagonally pressed down to the right from the board body 12 and rotates about the swiveling axis 28 such that the rear wheel 24 is placed on the right side of the board body 12 with respect to the center of the board body 12.

By inclining the board body 12 thus so as to move down the right or left side of the rear part 37, the swivel caster 21 is diagonally pressed down from the board body 12 and the swivel caster 21 can be largely rotated oppositely from the descending side of the board body 12.

The following will describe using methods of the skater 11 configured thus.

First discussed is the using method of the skater 11 when the board body 12 is not twisted.

A user holding the handle 16 puts one foot, e.g., a left foot 41 on the board body 12 and kicks the ground 29 with the other foot, e.g., a right foot 42 to apply a driving force to the skater 11.

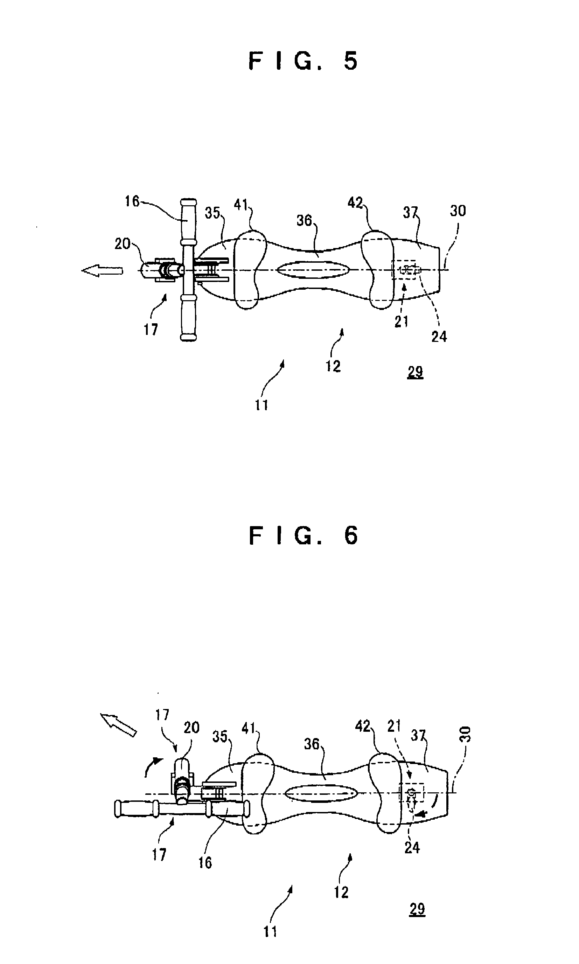

After the skater 11 starts traveling in response to the applied driving force, as shown in FIG. 5, the user gets on the skater 11 with the user's hands holding the handle 16, the left foot 41 on the front part 35 of the board body 12, and the right foot 42 on the rear part 37 of the board body 12. The user may get on the skater 11 with the right foot 42 on the front part 35 of the board body 12 and the left foot 41 on the rear part of the board body 12.

The user keeps the board body 12 in parallel with the ground 29 during the traveling of the skater 11 and holds the handle 16 such that the front wheel 20 of the fixed caster 17 rolls in the longitudinal direction of the board body 12, so that the skater 11 travels straight ahead.

During the traveling of the skater 11, when the user turns the handle 16 to the right while keeping the board body 12 in parallel with the ground 29, the front wheel 20 of the fixed caster 17 rolls to the right. Thus the skater 11 turns to the right.

During the traveling of the skater 11, when the user turns the handle 16 to the left while keeping the board body 12 in parallel with the ground 29, the front wheel 20 of the fixed caster 17 rolls to the left. Thus the skater 11 turns to the left.

The driving method is similar to that of a two-wheel skater that has a handle but does not have a swivel caster 21 according to the related art. The skater 11 can be also driven as follows:
During the traveling of the skater 11, the overall board body 12 is inclined about the longitudinal axis 30 so as to move down to the right while the handle 16 is held to roll the front wheel 20 of the fixed caster 17 in the longitudinal direction of the board body 12. Hence, the swivel caster 21 rotates about the swiveling axis 28 such that the rear wheel 24 is placed on the left side of the board body 12 with respect to the center of the board body 12. Thus in plan view, the rear wheel 24 rolls on the ground 29 and the skater 11 can turn clockwise with respect to the fixed caster 17 such that the rear part 37 draws an arc. It is therefore possible to turn the skater 11 to the right without steering the handle. At this point, the turning radius of the skater 11 is substantially equal to the length of the skater 11, so that the turning radius of the skater 11 can be reduced.

During the traveling of the skater 11, the overall board body 12 is inclined about the longitudinal axis 30 so as to move down to the left while the handle 16 is held to roll the front wheel 20 of the fixed caster 17 in the longitudinal direction of the board body 12. Hence, the swivel caster 21 rotates about the swiveling axis 28 such that the rear wheel 24 is placed on the right side of the board body 12 with respect to the center of the board body 12. Thus in plan view, the rear wheel 24 rolls on the ground 29 and the skater 11 can turn counterclockwise with respect to the fixed caster 17 such that the rear part 37 draws an arc. It is therefore possible to turn the skater 11 to the right without steering the handle. At this point, the turning radius of the skater 11 is substantially equal to the length of the skater 11, so that the turning radius of the skater 11 can be reduced.

As shown in FIG. 6, during the traveling of the skater 11, when the handle 16 is rapidly turned to the right with the board body 12 kept in parallel with the ground 29, the board body 12 is inclined such that the right side of the board body 12 is moved down with respect to the longitudinal axis 30. Further, the swivel caster 21 is diagonally pressed down to the left from the board body 12 and the rear wheel 24 moves to the left orthogonally to the longitudinal direction of the board body 12. Thus the skater 11 advances diagonally to the right while sliding the front wheel 20 and the rear wheel 24. The user holding the handle 16 can keep his/her balance on the board body 12, so that the skater 11 can be easily driven thus only by steering the handle 16.

Also when the handle 16 is rapidly turned to the left with the board body 12 kept in parallel with the ground 29, the skater 11 can similarly advance diagonally to the left while sliding the front wheel 20 and the rear wheel 24.

When the board body 12 of the skater 11 is not twisted thus, the skater 11 can travel in a similar manner to a two-wheel skater that has a handle but does not have the swivel caster 21 according to the related art. Further, since the swivel caster 21 is attached to the inclined plane 26 of the wedge part 25 on the rear part 37 of the board body 12, the rear wheel 24 of the swivel caster 21 can roll with respect to the front wheel 20 of the fixed caster 17 so as to draw an arc on the ground 29. Thus the board body 12 can be turned by rapidly turning the rear part 37 with respect to the front part 35. It is therefore possible to reduce the turning radius as compared with a two-wheel skater that has a handle but does not have the swivel caster 21 according to the related art, achieving improved cornering.

The following will describe the method of using the skater 11 by twisting the board body 12.

As in the case where the board body 12 is not twisted, a driving force for moving forward has to be applied to the skater 11 at the start of traveling by kicking the ground 29 with one foot while the other foot is put on the board body 12.

When the user kicks the ground 29 with one foot to start driving the skater 11, the board body 12 is placed in parallel with the ground 29, the swivel caster 21 is not rotated, and the rear wheel 24 of the swivel caster 21 is oriented in the longitudinal direction of the board body 12. Thus the skater 11 travels in a state in which the front wheel 20 of the fixed caster 17 and the rear wheel 24 of the swivel caster 21 are both oriented in parallel with the longitudinal axis 30 of the board body 12.

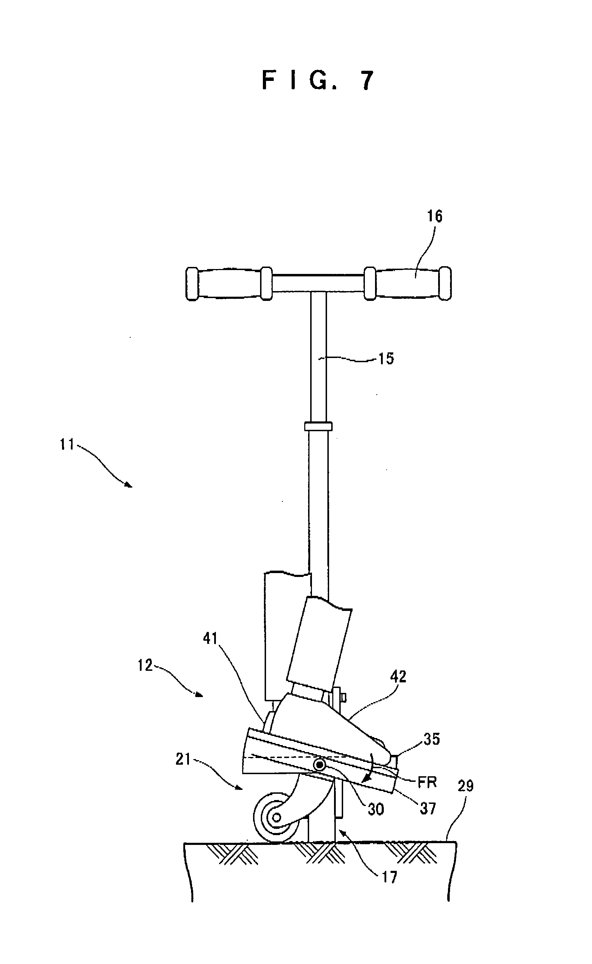

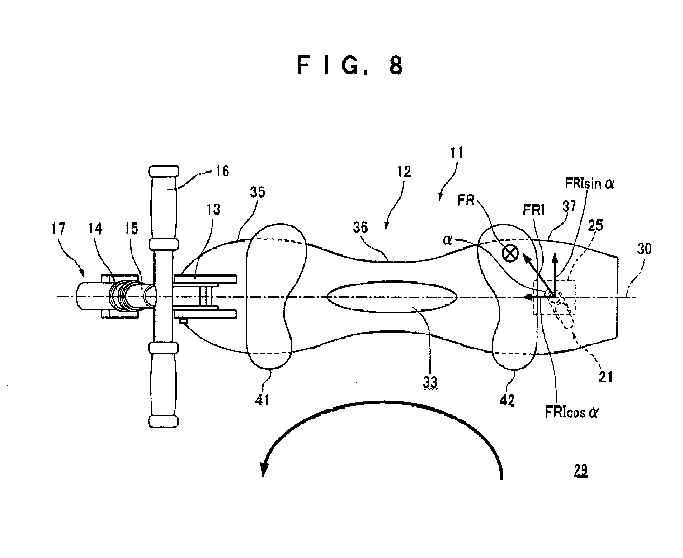

During the traveling of the skater 11, a driving force is further applied to the skater 11 as follows:
The user on the board body 12 shifts his/her weight with the left foot 41 on the front part 35 and the right foot 42 on the rear part 37. For example, as shown in FIGS. 7 and 8, first in a state in which a force is evenly applied downward from the toe and heel of the left foot 41 to the front part 35 of the board body 12, a force FR is applied downward from the toe of the right foot 42 to the right side of the rear part 37 of the board body 12. Thus a twisting force is applied to the board body 12 about the longitudinal axis 30, so that the rear part 37 of the board body 12 is twisted clockwise with respect to the front part 35 about the traveling direction of the skater 11 while the front part 35 is kept in parallel with the ground 29, and the right side of the rear part 37 of the board body 12 is inclined downward (FIG. 7). When the right side of the rear part 37 of the board body 12 is inclined downward, the swivel caster 21 rotates about the swiveling axis 28 (FIG. 4) and the rear wheel 24 of the swivel caster 21 moves to the left of the board body 12 with respect to the center of the board body 12. Thus the rear wheel 24 of the swivel caster 21 rolls at a predetermined angle α with respect to the longitudinal direction of the board body 12, so that the swivel caster 21 rolls on the ground at the predetermined angle α with respect to the longitudinal direction of the board body 12 (FIG. 8). In plan view, the rear part 37 of the board body 12 turns clockwise with respect to the front wheel 20 of the fixed caster 17. Therefore, the user on the board body 12 can turn the board body 12 to the right only by shifting his/her weight, without steering the handle 16.

Next, in a state in which the board body 12 is twisted, the user shifts his/her weight to the opposite side from FIGS. 7 and 8 to eliminate the force FR having been applied downward to the right side of the rear part 37 of the board body 12. When the twisting force applied to the board body 12 is eliminated, a force for restoring the board body 12 to the initial state is applied to the swivel caster 21 according to the torsion of the board body 12. To be specific, because of the restoring force, a force is applied so as to press the swivel caster 21 diagonally downward to the ground 29 in a rear direction. As a reaction of the pressing force, a force is applied diagonally upward in a forward direction from the ground 29 to the board body 12 through the swivel caster 21. In the force applied diagonally upward in the forward direction, a force component in parallel with the board body 12 is a component force FRI. Moreover, in the component force FRI, a component along the longitudinal direction of the board body 12 is denoted as FRIcoscα. The component FRIcosα along the longitudinal direction of the board body 12 acts as a driving force for advancing the skater 11 (FIG. 8).

Hence, the user can obtain a desired driving force by shifting his/her weight on the board body 12.

In the component force FRI, a component orthogonal to the longitudinal direction of the board body 12 is FRIsinα. The component FRIsinα orthogonal to the longitudinal direction of the board body 12 turns the board body 12 counterclockwise in plan view, so that the overall skater 11 turns to the left (FIG. 8).

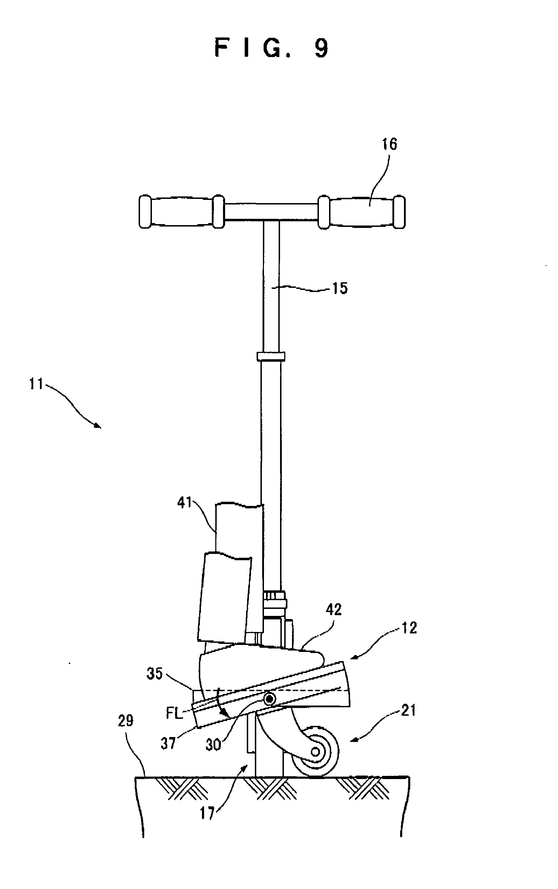

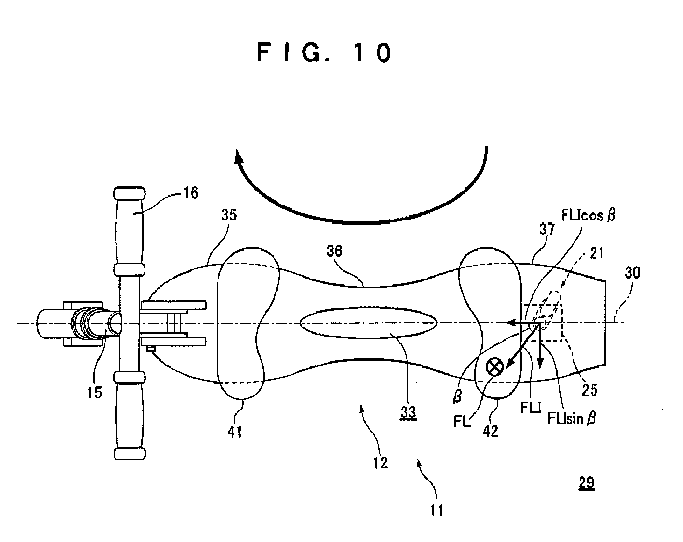

As shown in FIGS. 9 and 10, in a state in which a force is evenly applied from the toe and heel of the left foot 41 to the front part 35 of the board body 12, a force FL is applied downward from the heel of the right foot 42 to the left side of the rear part 37 of the board body 12. Thus a twisting force is applied to the board body 12 about the longitudinal axis 30, so that the rear part 37 of the board body 12 is twisted counterclockwise with respect to the front part 35 about the traveling direction of the skater 11 while the front part 35 is kept in parallel with the ground 29, and the left side of the rear part 37 of the board body 12 is inclined downward (FIG. 9). When the left side of the rear part 37 of the board body 12 is inclined downward, the swivel caster 21 rotates about the swiveling axis 28 (FIG. 4) and the rear wheel 24 of the swivel caster 21 moves to the right with respect to the center of the board body 12. Thus the rear wheel 24 of the swivel caster 21 rolls at a predetermined angle β with respect to the longitudinal direction of the board body 12, so that the swivel caster 21 rolls on the ground at the predetermined angle β with respect to the longitudinal direction of the board body 12 (FIG. 10). In plan view, the rear part 37 of the board body 12 turns counterclockwise with respect to the front wheel 20 of the fixed caster 17. Therefore, the user on the board body 12 can turn the board body 12 to the left only by shifting his/her weight, without steering the handle 16.

Next, in a state in which the board body 12 is twisted, the user shifts his/her weight to the opposite side from FIGS. 9 and 10 to eliminate the force FL having been applied downward to the left side of the rear part 37 of the board body 12. When the twisting force applied to the board body 12 is eliminated, a force for restoring the board body 12 to the initial state is applied to the swivel caster 21 according to the twisting of the board body 12. To be specific, because of the restoring force, a force is applied so as to press the swivel caster 21 diagonally downward to the ground 29 in a rear direction. As a reaction of the pressing force, a force is applied diagonally upward in a forward direction from the ground 29 to the board body 12 through the swivel caster 21. In the force applied diagonally upward in the forward direction, a force component in parallel with the board body 12 is a component force FLI. Moreover, in the component force FLI, a component along the longitudinal direction of the board body 12 is denoted as FLIcosβ. The component FLIcosβ along the longitudinal direction of the board body 12 acts as a driving force for advancing the skater 11 (FIG. 10).

Hence, the user can obtain a desired driving force by shifting his/her weight on the board body 12.

In the component force FLI, a component orthogonal to the longitudinal direction of the board body 12 is denoted as FLIsinβ. The component FLIsinβ orthogonal to the longitudinal direction of the board body 12 turns the board body 12 clockwise, so that the overall skater 11 turns to the right (FIG. 10).

By repeatedly shifting the weight of the user, the board body 12 is alternately twisted. Because of the restoring force against the twisting of the board body 12, the skater 11 travels zigzag while alternately turning to the left and the right.

When the user wants to drive the skater 11 straight ahead while generating a driving force by alternately twisting the board body 12, the user turns the handle 16 opposite to the turning direction of the board body 12. Thus the user can drive the front wheel 20 of the fixed caster 17 straight ahead while turning the board body 12 to the left and right. Consequently, the overall skater 11 can be driven straight ahead.

When the user stops shifting his/her weight on the board body 12, the skater 11 coasts by the momentum of the preceding traveling.

The user shifting his/her weight on the board body 12 holds the handle 16 and thus can freely switch forces applied to the rear part 37 of the board body 12 by shifting his/her weight, while positively keeping his/her balance on the board body 12. Therefore, the user can stably and safely twist the overall board body 12.

In this way, the user can obtain a driving force for driving forward the skater 11, only by shifting his/her weight on the board body 12 to alternately twist the board body 12 clockwise and counterclockwise about the axis 30 provided along the traveling direction of the skater 11.

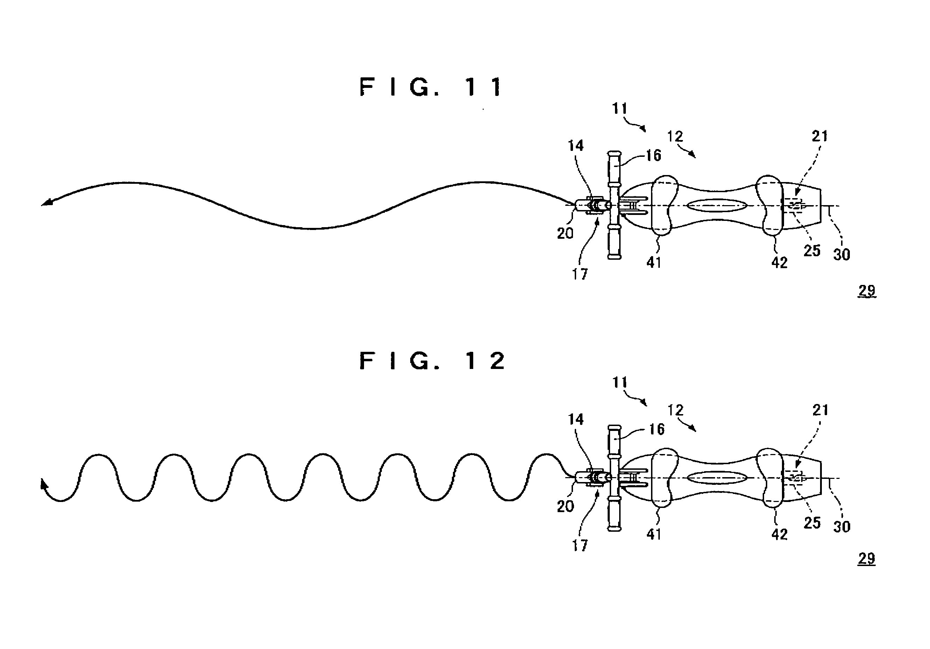

FIGS. 11 and 12 are plan views showing the tracks of the skater 11 that is driven by alternately twisting the board body 12 as has been discussed. FIG. 11 shows the track of the skater 11 when the rear part 37 of the board body 12 is alternately pressed on the right and left sides with the right foot 42 at relatively long intervals. FIG: 12 shows the track of the skater 11 when the rear part 37 of the board body 12 is alternately pressed on the right and left sides with the right foot 42 at relatively short intervals.

As shown in FIG. 11, when the rear part 37 of the board body 12 is alternately pressed on the right and left sides at relatively long intervals, the track of the skater 11 is shaped like long waves. In this case, the shifting of the weight applies a small driving force to the skater 11, so that the skater 11 travels with a relatively low velocity.

As shown in FIG. 12, when the rear part 37 of the board body 12 is alternately pressed on the right and left sides at relatively short intervals, the track of the skater 11 is shaped like short waves. In this case, the shifting of the weight applies a large driving force to the skater 11, so that the skater 11 travels faster as compared with the case where the board body 12 is alternately pressed on the right and left sides at relatively long intervals.

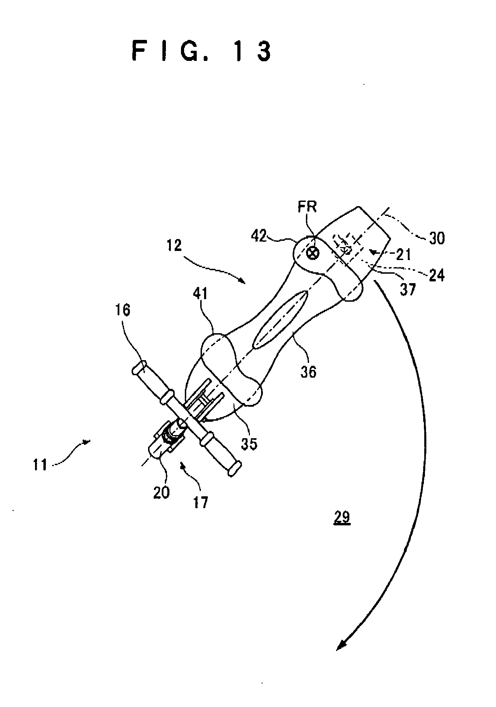

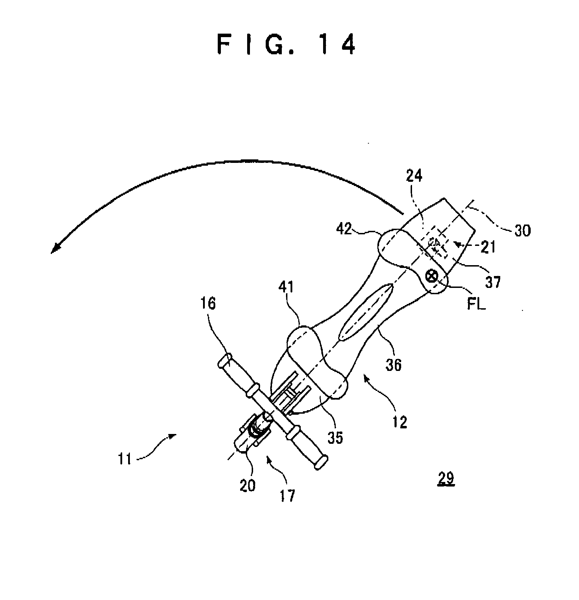

FIGS. 13 and 14 show the turning tracks of the board body 12.

As shown in the plan view of FIG. 13, when the force FR pressing downward the right side of the rear part 37 of the board body 12 is continuously applied from the toe of the right foot 42, the board body 12 turns clockwise with respect to the front wheel 20 of the fixed caster 17.

As shown in the plan view of FIG. 14, when the force FL pressing downward the left side of the rear part 37 of the board body 12 is continuously applied from the heel of the right foot 42, the board body 12 turns counterclockwise with respect to the front wheel 20 of the fixed caster 17.

At this point, the handle 16 is oriented with respect to the longitudinal direction of the board body 12. The skater 11 can be easily driven thus because the board body 12 is twistable and is provided with the swivel caster 21. Further, the skater 11 can be reduced in turning radius.

In the first embodiment, only the single swivel caster 21 is provided on the underside of the rear part 37 of the board body 12. The number of swivel casters is not particularly limited. For example, multiple swivel casters may be placed in series with a traveling direction on the underside of the rear part 37 of the board body 12. Alternatively, multiple swivel casters may be placed in parallel with the traveling direction on the underside of the rear part 37 of the board body 12. By providing multiple swivel casters on the underside of the rear part 37 of the board body 12, the skater can be driven with higher stability.

A second embodiment of the present invention will be described below in accordance with the accompanying drawings.

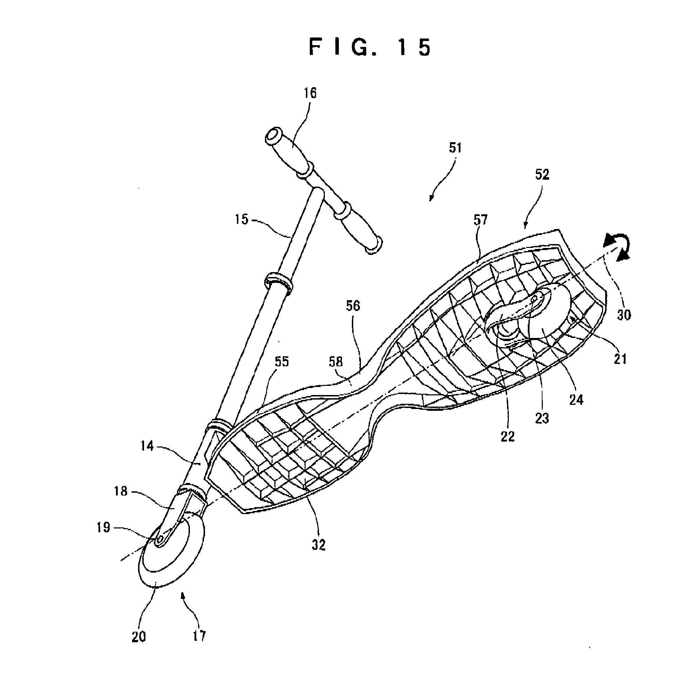

FIG. 15 is a perspective view showing a skater 51 from diagonally below according to the second embodiment of the present invention. In the following explanation, the same configurations as in the first embodiment will be indicated by the same reference numerals and detailed description thereof is omitted.

In the first embodiment, the through hole 33 is provided in the central part 36 of the board body 12 to satisfactorily twist the board body 12, whereas in the second embodiment, a board body 52 is not provided with a through hole but has a central part 56 of the board body 52 smaller in width than the central part 36 of the board body 12 of the first embodiment in the crosswise direction, and a rib 58 formed along the edge of the board body 52 is increased in height in the central part of the board body 52.

Also in this case, the board body 52 can satisfactorily twist a rear part 57 with respect to a front part 55 and an elastically restoring force can be obtained. Further, the board body 52 can be smaller in width in plan view as compared with a board body having a through hole formed in the central part. The central part 56 of the board body 52 may be prismatic or cylindrical. The skater 51 configured according to the second embodiment can achieve the same technical effect as the skater 11 of the first embodiment.

A third embodiment of the present invention will be described below in accordance with the accompanying drawings.

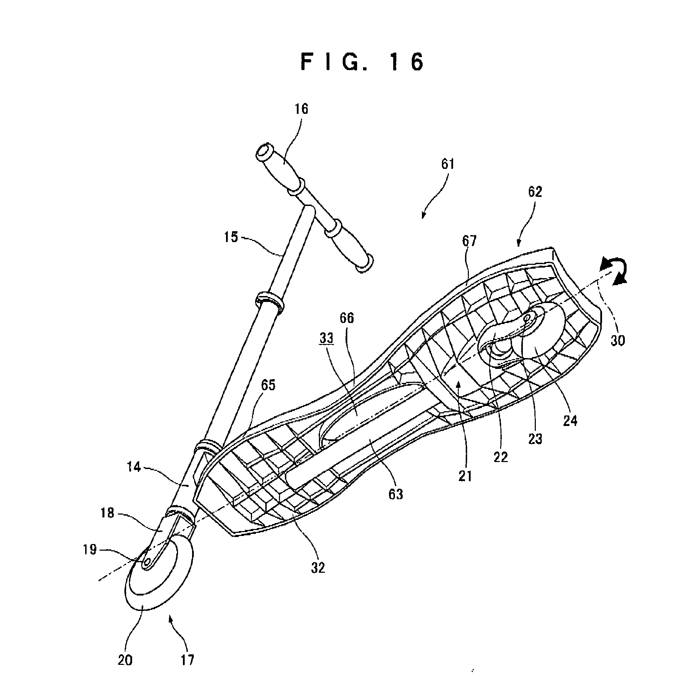

FIG. 16 is a perspective view showing a skater 61 from diagonally below according to the third embodiment of the present invention. In the following explanation, the same configurations as in the first embodiment will be indicated by the same reference numerals and detailed description thereof is omitted.

In the third embodiment, a reinforcing bar 63 is provided under a through hole 33 in a central part 66 of a board body 62. The reinforcing bar 63 is extended along the longitudinal direction of the board body 62 and connects a front part 65 and a rear part 67 of the board body 62. The reinforcing bar 63 is a metal pipe. Welded on the front end of the reinforcing bar 63 is a mounting plate (not shown) for mounting the reinforcing bar 63 to the undersurface of the front part 65 of the board body 62. The reinforcing bar 63 is fixed by securing the mounting plate to the undersurface of the front part 65 of the board body 62 by a screw. The rear end of the reinforcing bar 63 is fit into a round hole formed on the rear part 67 of the board body 62 and is supported such that the reinforcing bar 63 can be inserted and removed to and from the round hole.

The skater 61 configured according to the third embodiment can achieve the same technical effect as the skater 11 of the first embodiment.

Since the skater 61 of the third embodiment includes the reinforcing bar 63 in the longitudinal direction of the board body 62, it is possible to improve a bending strength around the through hole 33 of the board body 62.

Further, since the skater 61 of the third embodiment includes the reinforcing bar 63 under the board body 62, a user can slide the skater 61 with the reinforcing bar 63 in contact with a rail such as the balustrade of a staircase.

A fourth embodiment of the present invention will be described below in accordance with the accompanying drawings.

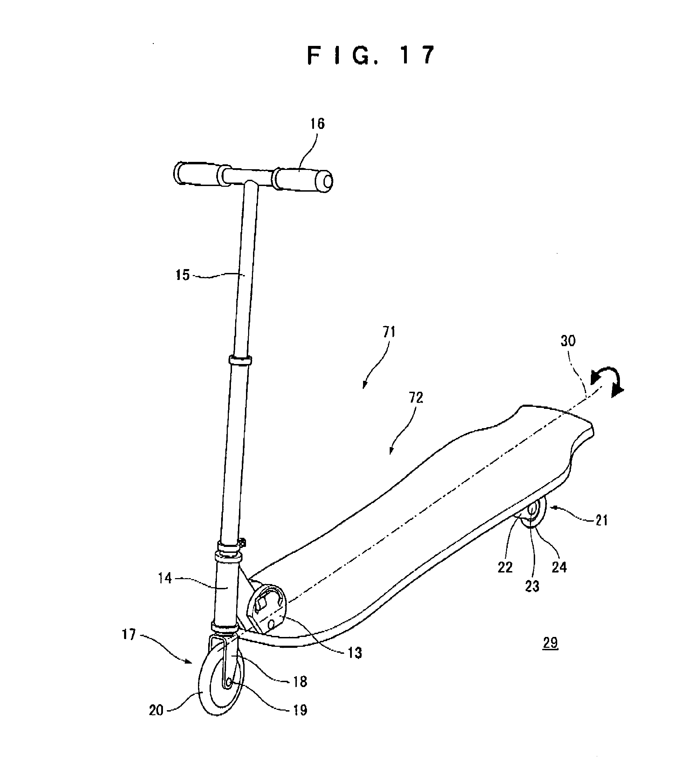

FIG. 17 is a perspective view showing a skater 71 from diagonally above according to the fourth embodiment of the present invention. In the following explanation, the same configurations as in the first embodiment will be indicated by the same reference numerals and detailed description thereof is omitted.

The skater 71 of the fourth embodiment has a wooden board body 72. The board body 72 is made of wood like a typical skateboard and thus the front and rear ends of the board body 72 can be elastically twisted relative to each other about a longitudinal axis 30. The skater 71 configured according to the fourth embodiment can achieve the same technical effect as the skater 11 of the first embodiment.

A fifth embodiment of the present invention will be described below in accordance with the accompanying drawings.

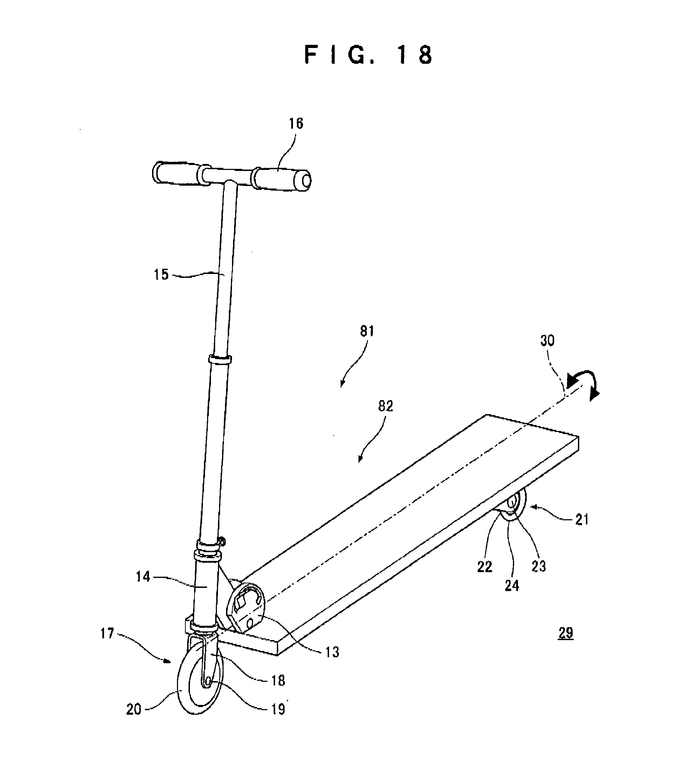

FIG. 18 is a perspective view showing a skater 81 from diagonally above according to the fifth embodiment of the present invention. In the following explanation, the same configurations as in the first embodiment will be indicated by the same reference numerals and detailed description thereof is omitted.

The skater 81 of the fifth embodiment includes a metallic board body 82. The board body 82 can be twisted about a longitudinal axis 30. The skater 81 configured according to the fifth embodiment can achieve the same technical effect as the skater 11 of the first embodiment.

In the first to fifth embodiments, when the board body 82 is too rigid to be twisted, a user does not twist the board body 82 but presses or inclines the rear part of the board body 82 to the right or the left with one foot while keeping the board body 82 flat. Thus the swivel caster 21 can be rotated and the turning radius of the skater can be reduced.

A sixth embodiment of the present invention will be described below in accordance with the accompanying drawings.

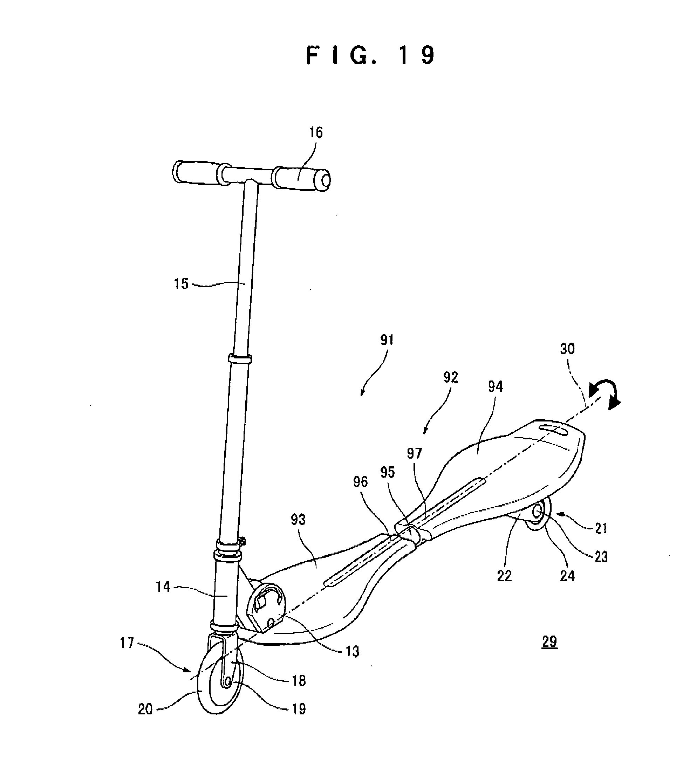

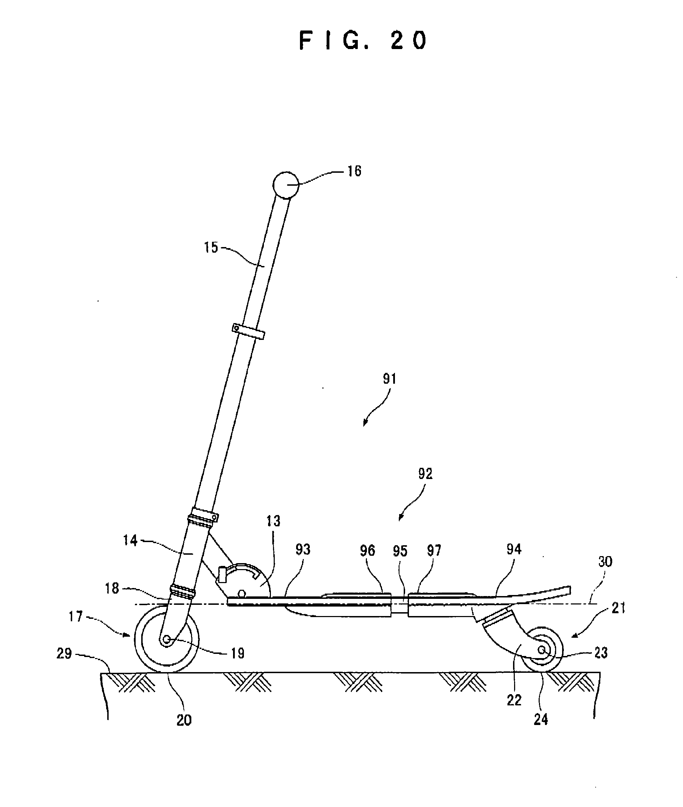

FIG. 19 is a perspective view showing a skater 91 from diagonally above according to the sixth embodiment of the present invention. FIG. 20 is a side view of the skater 91. In the following explanation, the same configurations as in the first embodiment will be indicated by the same reference numerals and detailed description thereof is omitted.

In the skater 11 of the first embodiment, the board body 12 is composed of a single footboard. In the skater 91 of the sixth embodiment, a board body 92 is composed of a front footboard 93 and a rear footboard 94.

The skater 91 includes: the front footboard 93; a folding mechanism 13 fixed to the front end of the front footboard 93; a handle support part 14 fixed to the folding mechanism 13; the rear footboard 94; a twisted pipe 95 acting as a connecting element separately connecting the front footboard 93 and the rear footboard 94; a swivel caster 21 that is attached to the underside of the rear footboard 94 with a swiveling axis inclined in the traveling direction of the skater; a handle 16 supported by the handle support part 14 so as to rotate about a handle shaft 15; and a fixed caster 17 under the handle 16.

The front footboard 93 and the rear footboard 94 are plates made of, e.g., a synthetic resin material. The front footboard 93 and the rear footboard 94 are connected via the twisted pipe 95, which is a metallic round pipe, so as to twist about a longitudinal axis 30. The front footboard 93 connected to the twisted pipe 95 has a pipe support part 96 provided on the rear end of the front footboard 93. The rear footboard 94 has a pipe support part 97 provided on the front end of the rear footboard 94. The pipe support part 96 and the pipe support part 97 are smaller in width than parts where user's feet are placed on the front footboard 93 and the rear footboard 94. The twisted pipe 95 is not limited to a round pipe and thus may be, e.g., a square bar.

The front footboard 93 and the rear footboard 94 may be made of any materials as long as the footboards are rigid enough to bear a user. Instead of the synthetic resin material, materials such as woods and metals may be used.

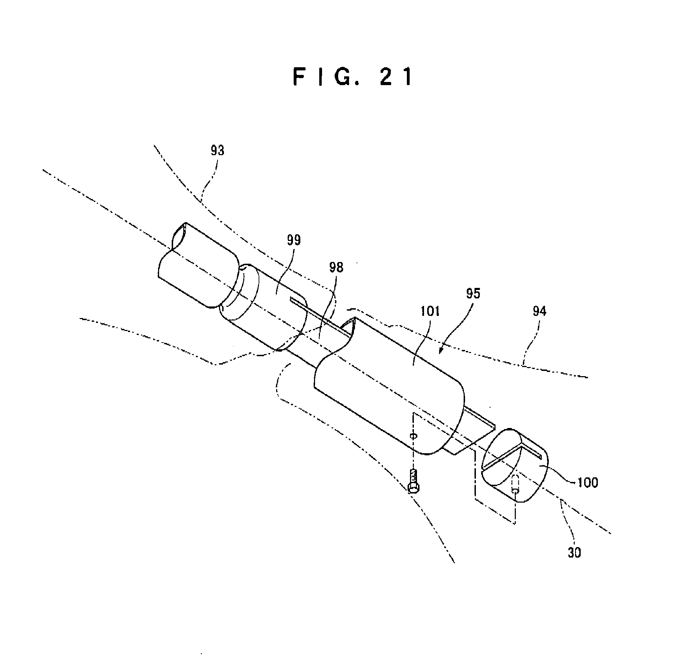

As shown in FIG. 21, the twisted pipe 95 includes: an inner pipe 99 fixed to the pipe support part 96 of the front footboard 93; a holder 100 fixed to the pipe support part 97 of the rear footboard 94; a plate spring 98 having both ends connected to the inner pipe 99 and the holder 100; and an outer pipe 101 covering the plate spring 98 fixed to the holder 100.

The plate spring 98 for applying a restoring force has one end connected to the inner pipe 99 and the other end connected to the holder 100. Thus the plate spring 98 is elastically deformed by a twisting force relatively applied between the inner pipe 99 and the holder 100. When the twisting force is eliminated, the twisted pipe 95 is restored to the initial state by the restoring force.

The skater 91 configured according to the sixth embodiment can achieve the same technical effect as the skater 11 of the first embodiment.

Further, in the skater 91 of the sixth embodiment, when the front footboard 93 and the rear footboard 94 are inclined downward to the right or the left to turn the skater 91 or generate a driving force of the skater 91 during the traveling of the skater 91, the restoring force of the plate spring 98 of the twisted pipe 95 can prevent the occurrence of large torsion between the front footboard 93 and the rear footboard 94. Thus the user can easily keep his/her balance on the skater 91 and safely drive the skater 91.

Moreover, in the skater 91 of the sixth embodiment, the front footboard 94, the twisted pipe 95, and the rear footboard 96 can be separated from one another. The separation of the front footboard 94, the twisted pipe 95, and the rear footboard 96 can reduce the size of the skater 91, so that the skater 91 is stored and carried in a convenient manner.

The skater 91 of the sixth embodiment may not include the plate spring 98 in the twisted pipe 95 connecting the front footboard 94 and the rear footboard 96. On both sides of the twisted pipe 95, elastic bodies of, e.g., an elastic rubber may be placed in parallel with the twisted pipe 95 and the ends of the front footboard 94 and the rear footboard 96 may be attached to the elastic bodies.

Also in this configuration, when the rear footboard 96 is twisted with respect to the front footboard 94 via the twisted pipe 95, a restoring force is obtained for restoring the front footboard 94 and the rear footboard 96 to the original positions.

A seventh embodiment of the present invention will be described below in accordance with the accompanying drawings.

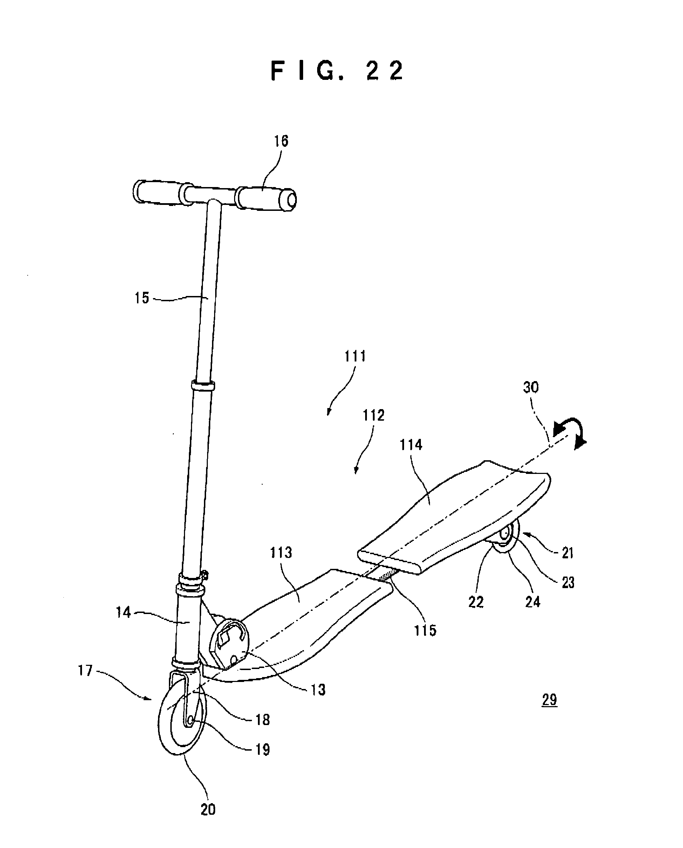

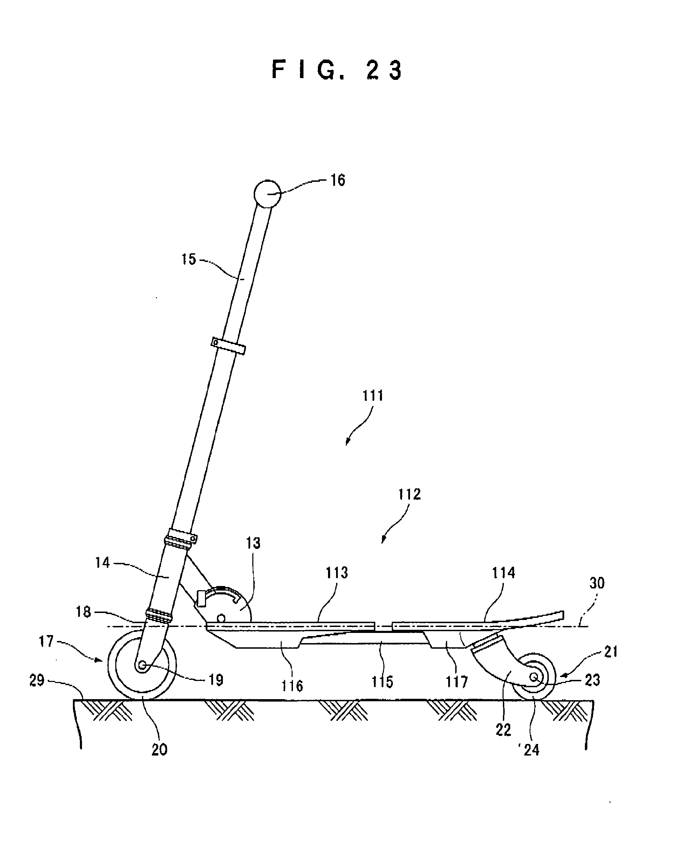

FIG. 22 is a perspective view showing a skater 111 from diagonally above according to the seventh embodiment of the present invention. FIG. 23 is a side view of the skater 111. In the following explanation, the same configurations as in the sixth embodiment will be indicated by the same reference numerals and detailed description thereof is omitted.

In the skater 111 of the seventh embodiment, a twisted pipe 115 is provided under a front footboard 113 and a rear footboard 114. The twisted pipe 115 is configured as the twisted pipe 95 of the sixth embodiment and acts as a connecting member and a member for applying a restoring force. In this case, support parts 116 and 117 for fixing the twisted pipe 115 are provided under the front footboard 113 and the rear footboard 114, respectively.

The skater 111 configured according to the seventh embodiment can achieve the same technical effect as the skater 11 of the first embodiment.

Since the skater 111 of the seventh embodiment includes the twisted pipe 115 on the underside of a board body 112, a user can slide the skater 111 with the twisted pipe 115 in contact with a rail such as the balustrade of a staircase.

## Claims

1. A two-wheel skater with a handle,
the skater comprising:
a boarding part elastically twistable about a longitudinal axis;
a rear wheel including a swivel caster that is attached to an underside of a rear part of the boarding part with a swiveling axis inclined in a traveling direction of the skater;
the handle; and
a front wheel steered by the handle.

2. The skater with the handle according to claim 1, wherein the boarding part is composed of a single footboard elastically twistable about the longitudinal axis.

3. The skater with the handle according to claim 2, wherein the footboard has a through hole in a central part of the footboard.

4. The skater with the handle according to claim 2, wherein the footboard has a central part smaller in width than a front part and a rear part of the footboard.

5. The skater with the handle according to claim 3, further comprising a reinforcing bar on an underside of the footboard, the reinforcing bar connecting a front part and a rear part of the footboard.

6. The skater with the handle according to claim 2, wherein the footboard is made of a synthetic resin material.

7. The skater with the handle according to claim 2, wherein the footboard is a wooden board.

8. The skater with the handle according to claim 2, wherein the footboard is a metallic board.

9. The skater with the handle according to claim 1, wherein the boarding part comprises a front footboard and a rear footboard, and
the skater further comprises:
a connecting member connecting the front footboard and the rear footboard such that the footboards are relatively twistable about the longitudinal axis; and
a member for applying a restoring force against the twisting.

10. The skater with the handle according to claim 9, wherein the connecting member and the member for applying the restoring force are provided on undersides of the front footboard and the rear footboard.
